# FASCICULE DE BREVET EUROPEEN

(11) **EP 1 407 960 B1**
(45) Date de publication et mention de la délivrance du brevet: **14.11.2007**
(21) Numéro de dépôt: 03292412.8
(22) Date de dépôt: 30.09.2003
(51) Int. Cl.: B62D 55/24, B62D 55/253

(54) **Chenille à bande souple sans fin avec nappes de renforcement, en particulier pour véhicules tout terrain**
Gummiraupe mit Verstärkungsschichten für Geländefahrzeuge
Elastomer track with reinforcement layers, especially for off-road vehicles

(30) Priorité: 07.10.2002 FR 0212426
(43) Date de publication de la demande: 14.04.2004
(73) Titulaire: OTICO, 77650 Longueville (FR)
(72) Inventeur: Piou, Denis, 89340 Villeblevin (FR); Phely, Olivier, 77520 Thenisy (FR)
(74) Mandataire: Bezault, Jean

(56) Documents cités:
- EP-A- 0 742 382
- WO-A-01/53144
- WO-A-01/89913
- US-A- 4 721 498

## Description

L'invention concerne une chenille à bande souple sans fin destinée notamment aux véhicules tout terrain.

Elle concerne plus particulièrement une chenille à bande souple sans fin formée d'un élastomère et comprenant un câble en acier enroulé en hélice et noyé dans l'épaisseur de la bande pour former des spires longitudinales sensiblement parallèles, ainsi qu'au moins une nappe de fils noyée dans l'épaisseur de la bande dans la direction du côté extérieur par rapport aux spires du câble.

Les fils qui composent la ou les nappes sont des câbles, généralement en acier, d'un diamètre plus faible que le câble enroulé en hélice. Ces fils peuvent être formés à partir d'un seul brin ou filament, de préférence à partir de plusieurs brins ou filaments assemblés.

On connaît déjà des chenilles de ce type qui sont utilisées de plus en plus en remplacement des chenilles classiques composées de maillons métalliques articulés entre eux. Ces chenilles souples trouvent une application dans de nombreux véhicules tout terrain, tels que des engins agricoles et de travaux publics . Une chenille de ce type est connue notamment par le brevet FR-A-2 711 959 (93 13211) au nom de la demanderesse. En outre, la description du document WO-A-0189913 couvre les caractéristiques du préambule de la revendication 1.

La bande souple sans fin en élastomère, généralement à base de caoutchouc naturel, vient s'enrouler autour de deux roues d'extrémité du véhicule, dont l'une au moins est motrice. La bande souple est généralement munie, sur son côté extérieur, de crampons pour favoriser l'adhérence avec le sol et, sur son côté intérieur, de moyens pour engrener avec la ou les roues motrices.

Le renforcement de la bande se fait non seulement par le câble en acier qui s'enroule en hélice dans l'épaisseur de la bande, mais aussi par des nappes de fils qui sont noyées dans l'épaisseur de la bande, dans la direction du côté intérieur et/ou du côté extérieur par rapport aux spires du câb le. Chacune de ces nappes est composée de fils, le plus souvent en acier, qui s'étendent parallèlement entre eux et qui ont un diamètre plus faible que le câble en acier.

La conception de ces nappes de renforcement, qui jouent le rôle d'armatures, pose de nombreuses difficultés en pratique.

Il faut en effet que ces nappes puissent résister aux efforts particulièrement importants que subit la chenille du fait de sa tension d'enroulement et des obstacles qu'elle rencontre. Il faut rappeler que la tension de la chenille est généralement comprise entre 3 et 12 tonnes et que la chenille subit des efforts importants dans différentes directions, notamment lorsque qu'elle est en dévers, qu'elle passe sur des obstacles qui peuvent être plus ou moins acérés et risquer de l'endommager.

Les chenilles connues jusqu'à présent ne permettent pas de résoudre efficacement ce problème.

C'est en conséquence le but de l'invention de procurer une chenille à bandes souples sans fin, du type défini précédemment, qui permet de remédier aux inconvénients précités.

L'invention propose à cet effet, une chenille à bande soup le sans fin du type ci-dessus, qui comprend des nappes extérieures formées successivement, depuis les spires du câble en direction du côté extérieur, par :
- une première nappe oblique formée de fils faisant un premier angle aigu par rapport à une perpendiculaire aux spires du câble ;
- une nappe transversale formée de fils faisant un angle droit par rapport aux spires du câble ; et
- une deuxième nappe oblique formée de fils faisant un deuxième angle aigu par rapport à une perpendiculaire aux spires du câble, le deuxième angle aigu s'étendant dans une direction opposée par rapport au premier angle aigu.

Ainsi, les nappes extérieures sont formées essentiellement par une nappe transversale comprise en sandwich entre deux nappes obliques dont les angles respectifs sont dans des directions opposées, l'un des angles pouvant être qualifié de positif et l'autre de négatif.

Cette combinaison de trois couches procure des résultats particulièrement avantageux. La nappe transversale contribue à donner une raideur transversale à la bande, ce qui lui permet de rester à plat, tout en facilitant l'enroulement. Il en résulte une très faible absorption de puissance lors de l'enroulement de la bande.

Les deux nappes obliques superposées contribuent à augmenter la résistance à la perforation lorsque la chenille passe sur un obstacle, par exemple un obstacle pointu. En outre, la présence de ces deux nappes obliques évite une déviation ou déformation latérale de la bande qui contribue à donner à celle-ci une forme incurvée, c'est à dire non linéaire.

La chenille de l'invention peut comprendre en outre une nappe transversale supplémentaire formée de fils faisant un an gle droit par rapport aux spires du câble et disposée après la deuxième nappe oblique dans la direction du côté extérieur. La bande souple comporte alors quatre nappes extérieures, la nappe transversale supplémentaire contribuant à accroître la raideur transversale de la bande.

Dans l'invention, la bande souple sans fin peut ne pas comporter de nappe intérieure, c'est à dire de nappe située entre les spires du câble et le côté intérieur de la bande.

Toutefois, dans certain cas, il peut être avantageux que la chenille comprenne en outre une nappe transversale intérieure formée de fils faisant un angle droit par rapport aux spires du câble et disposée après les spires du câble dans la direction du côté intérieur.

Dans l'invention, le premier angle aigu est avantageusement compris entre 15 et 25 degrés, et, de même, le deuxième angle aigu est avantageusement compris entre 15 et 25 degrés. De préférence, le premier angle aigu et le deuxième angle aigu ont la même valeur absolue.

Les nappes de fils sont avantageusement formées à partir d'une feuille bobinée de fils calandrés ayant un diamètre compris entre 1,0 et 2,5 millimètres. Les fils des nappes de fils sont de préférence de type multibrin. Quant au câble, il s'agit avantageusement d'un câble multibrin ayant un diamètre compris entre 4 et 6 millimètres.

Dans la description qui suit, faite seulement à titre d'exemple, on se réfère aux dessins annexés, sur lesquels :
- la figure 1 est une vue partielle de côté d'une chenille souple s'enroulant autour d'une roue motrice ;
- la figure 2A est une vue en coupe d'une bande souple sans fin dans une première forme de réalisation de l'invention ;
- la figure 2B et une vue de dessus avec arrachement montrant les différentes nappes de fils de la bande souple de la figure 2A ;
- les figures 3A et 3B sont des vues analogues aux figures 2A et 2B pour une deuxième forme de réalisation ; et
- les figures 4A et 4B sont des vues analogues aux figures 2A et 2B pour une troisième forme de réalisation de l'invention.

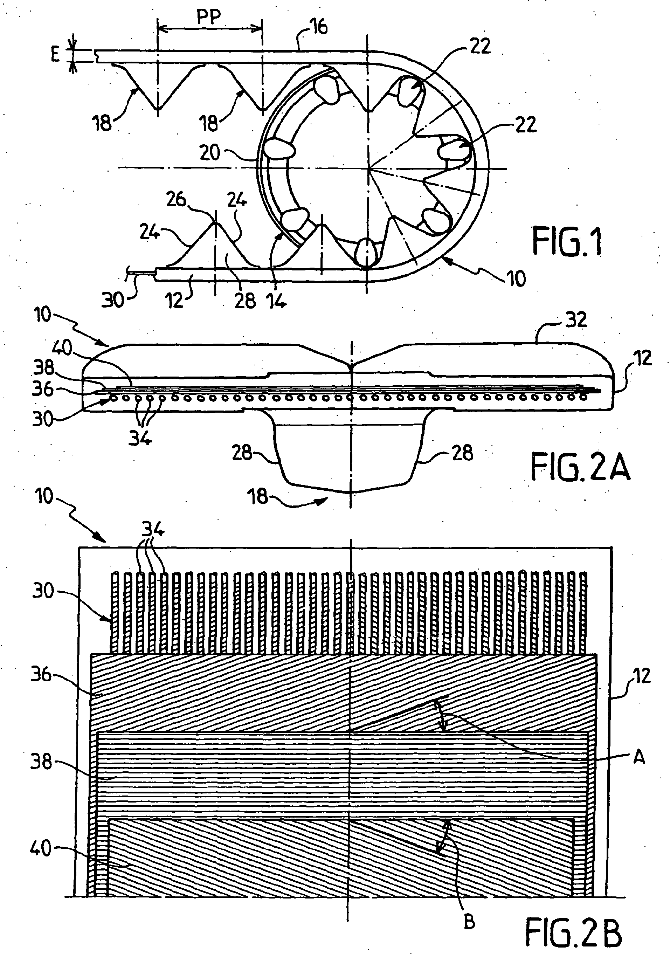

On se réfère d'abord à la figure 1 qui représente un dispositif d'entraînement d'une chenille souple 10 s' enroulant autour d'une roue motrice 14. Un tel dispositif d'entraînement est susceptible d'équiper des véhicules tout terrain de nature diverse, par exemple des engins agricoles, des engins de travaux publics, etc...

La chenille 10 est formée d'une bande souple sans fin 12 réalisée en matériau élastomère, par exemple à base de caoutchouc naturel, et renforcée intérieurement, c'est à dire dans son épaisseur, par des armatures décrites plus loin. Ces armatures sont formées par la superposition de nappes de matériaux à chaîne et à trame comportant généralement des fils métalliques.

La bande sans fin 12 comporte extérieurement une surface de roulement 16 habituellement munie de crampons (non représentés sur la figure 1). Elle est munie intérieurement d'une rangée de plots 18 situés dans le sens de la longueur de la bande et en principe équidistants entre eux d'un pas PP.

La roue motrice 14 est formée de deux jantes symétriques 20 réunies entre elles, à intervalles réguliers, par des taquets d'entraînement 22. Ces taquets sont disposés parallèlement entre eux à la périphérie de la roue et parallèlement aux génératrices de cette dernière.

Comme on le voit également sur la figure 1, les plots 18 ont sensiblement la forme d'une pyramide et comprennent chacun deux faces obliques 24 aboutissant à une face supérieure 26 et deux faces latérales 28.

La bande souple sans fin 12, en dehors des crampons (non représentés) et des plots a une épaisseur E qui est typiquement comprise entre 26 et 30 millimètres, le plus souvent proche de 28 millimètres.

La bande 12 est renforcée intérieurement, c'est à dire dans son épaisseur, par un câble de renforcement 30 qui est enroulé en hélice de manière continue pour former des spires généra lement parallèles entre elles.

On se réfère maintenant aux figures 2A et 2B pour montrer une première forme de réalisation de l'invention.

Sur la figure 2A, on voit la bande souple sans fin 12 avec ses crampons 32 du côté extérieur et ses plots 18 du côté intérieur. Dans l'épaisseur de la bande est noyé le câble de renforcement 30, qui est enroulé en hélice pour former des spires 34 longitudinales sensiblement parallèles entre elles. Comme on peut le voir aux figures 2A et 2B, dans l'épaisseur de la bande, sont en outre noyées trois nappes extérieures formée successivement, depuis les spires 34 du câble en direction du côté extérieur, par :
- une première nappe oblique 36 formée de fils parallèles entre eux faisant un premier angle aigu A par rapport à une perpendiculaire aux spires du câble ;
- une nappe transversale 38 formée de fils faisant un angle droit par rapport aux spires du câble ; et
- une deuxième nappe oblique 40 formée de fils faisant un deuxième angle aigu B par rapport à une perpendiculaire aux spires du câble, le deuxième angle aigu B s'étendant dans une direction opposée par rapport au premier angle aigu A.

L'angle A peut être qualifié de positif et l'angle B de négatif, ou inversement. La valeur de l'angle A est avantageusement comprise entre 15 et 25 degrés et il en est de même pour l'angle aigu B.

De préférence, l'angle A et l'angle B ont la même valeur absolue, par exemple d'environ 20 degrés.

Comme on le voit sur les figures 2A et 2B, les nappes 36, 38 et 40 ont des dimensions différentes dans la direction de la largeur de la bande afin d'éviter la formation, sur les bords des nappes, de points durs qui seraient susceptibles de favoriser le décollement du matériau élastomère dans lequel sont noyés le câble et les nappes de renforcement.

Les nappes de fils 36, 38 et 40 sont avantageusement formées chacune à partir d'une même feuille bobinée de fils parallèles entre eux et calandrés ayant un diamètre compris entre 1,0 et 2,5 millimètres. Ces fils sont avantageusement du type multibrin, mais peuvent dans certains cas être du type monobrin.

Le câble 30 est habituellement du type multibrin et son diamètre est généralement compris entre 4 et 6 millimètres.

La combinaison de la nappe transversale 38 prise en sandwich entre les nappes obliques 36 et 40, contribue à améliorer les performances de la bande souple sans fin, en lui conférant des propriétés particulièrement avantageuses. La trame transversale 38 confère une raideur transversale à la bande, lui permettant de rester à plat et elle facilite en outre l'enroulement de la bande.

La présence des deux nappes obliques 36 et 40 augmente la résistance à la perforation, lorsque la chenille passe sur des obstacles pointus ou acérés. En outre, la présence de ces deux nappes obliques empêche tout risque de déviation latérale de la bande, c'est à dire d'incurvation de la bande lorsqu'on considère la projection de la bande sur un plan horizontal.

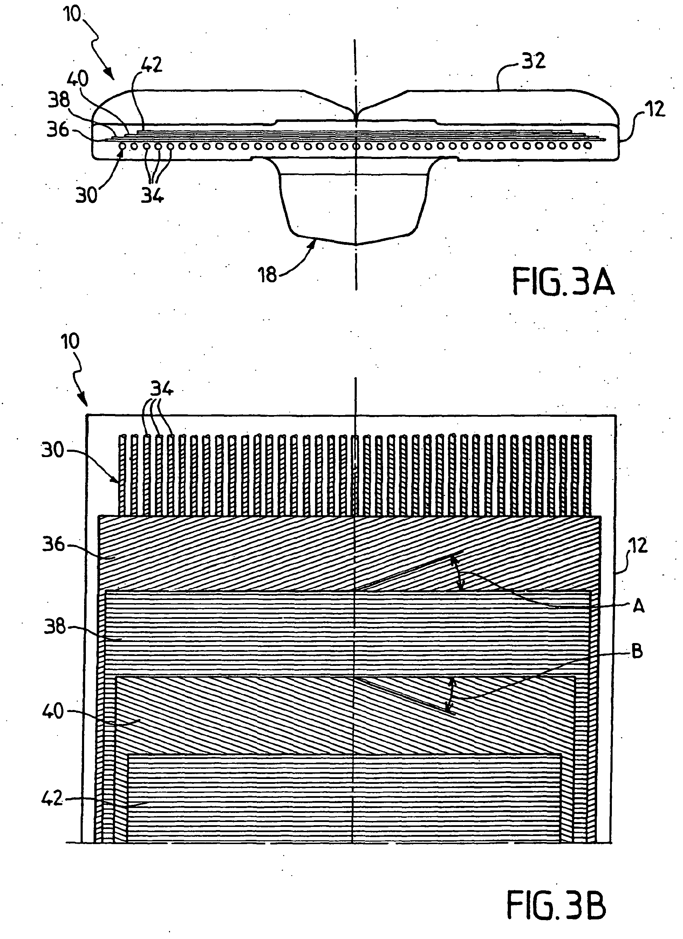

La forme de réalisation des figures 3A et 3B est semblab le à celle des figures 2A et 2B, si ce n'est que la bande comprend en outre une nappe transversale supplémentaire 42 formée de fils faisant un angle droit par rapport aux spires du câble et disposée après la deuxième nappe oblique dans la direction du côté extérieur. La présence de cette nappe supplémentaire contribue à accroître la raideur ou rigidité transversale de la bande, qui est nécessaire pour qu'une chenille en caoutchouc fonctionne correctement.

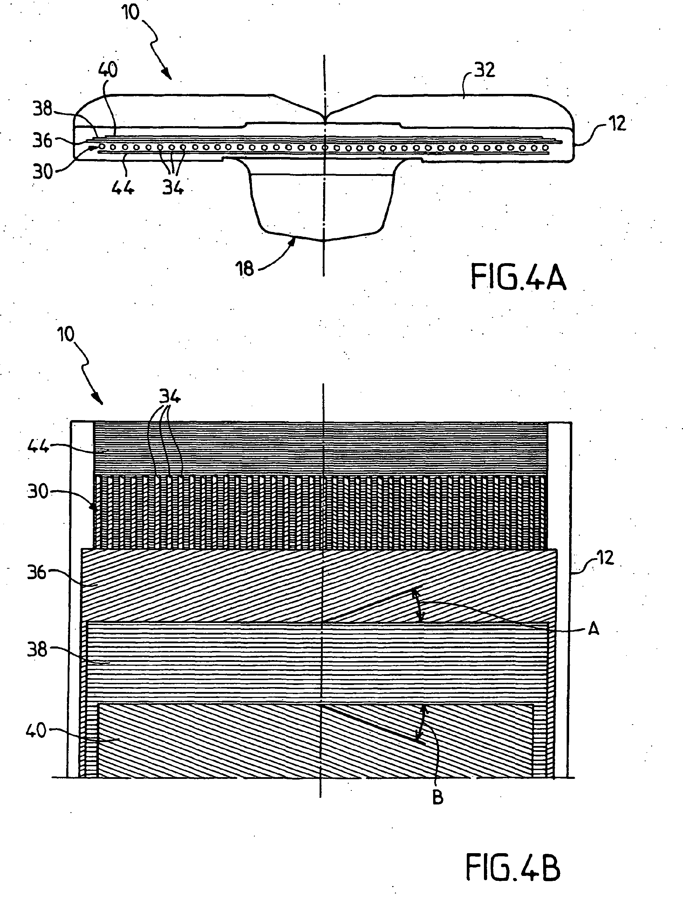

La forme de réalisation des figures 4A et 4B s'apparente à celles des figures 2A et 2B, sauf que la bande comprend en outre une nappe transversale intérieure 44 formée de fils faisant un angle droit par rapport aux spires du câble et disposée après les spires du câble dans la direction du côté intérieur.

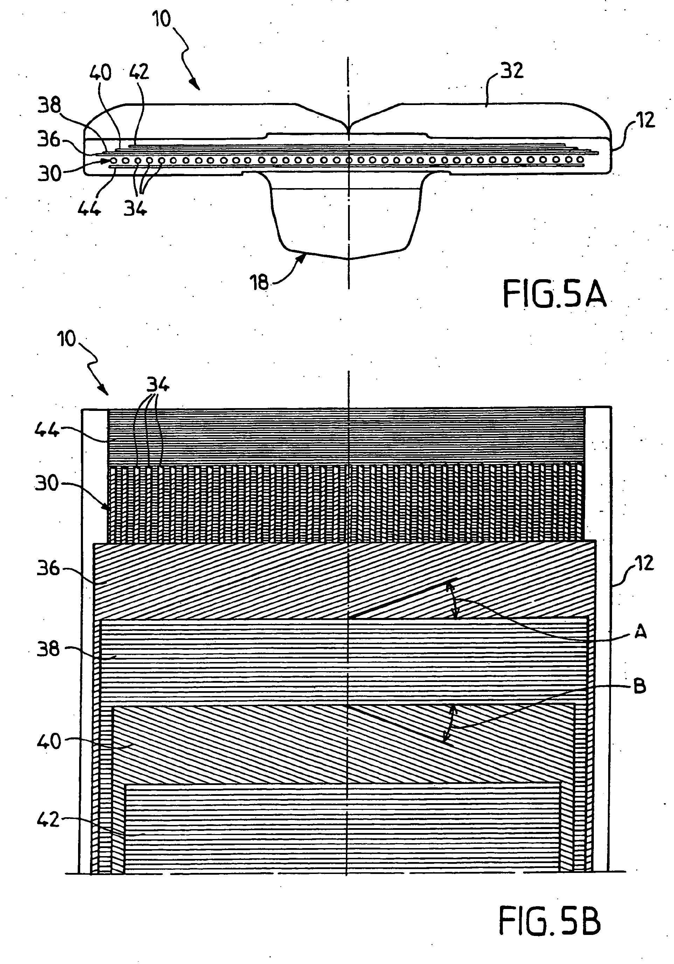

La forme de réalisation des figures 5A et 5B s'apparente étroitement à celles des figures 3A et 3B, sauf qu' elle comprend en outre une nappe transversale intérieure 44 analogue à celle des figures 4A et 4B.

L'invention est susceptible de nombreuses variantes de réalisation et n'est pas limitée aux formes de réalisation décrites précédemment à titre d'exemple.

## Revendications

1. Chenille à bande souple sans fin formée d'un élastomère et comprenant un câble (30) en acier enroulé en hélice et noyé dans l'épaisseur de la bande (12) pour former des spires longitudinales (34) sensiblement parallèles, ainsi qu'au moins une nappe de fils noyée dans l'épaisseur de la bande dans la direction du côté extérieur par rapport aux spires du câble,
**caractérisée en ce qu**'elle comprend des nappes extérieures formées successivement, depuis les spires (34) du câble en direction du côté extérieur, par :
- une première nappe oblique (36) formée de fils faisant un premier angle aigu (A) par rapport à une perpendiculaire aux spires du câble ;
- une nappe transversale (38) formée de fils faisant un angle droit par rapport aux spires du câble ; et
- une deuxième nappe oblique (40) formée de fils faisant un deuxième angle aigu (B) par rapport à une perpendiculaire aux spires du câble, le deuxième angle aigu (B) s'étendant dans une direction opposée par rapport au premier angle aigu (A).

2. Chenille à bande souple sans fin selon la revendication 1, **caractérisée en ce qu**'elle comprend en outre une nappe transversale supplémentaire (42) formée de fils faisant un angle droit par rapport aux spires du câble et disposée après la deuxième nappe oblique (40) dans la direction du côté extérieur.

3. Chenille à bande souple sans fin selon l'une des revendications 1 et 2, **caractérisée en ce qu**'elle comprend en outre une nappe transversale intérieure (44) formée de fils faisant un angle droit par rapport aux spires du câble et disposée après les spires du câble dans la direction du côté intérieur.

4. Chenille à bande souple sans fin selon l'une des revendications 1 à 3, **caractérisée en ce que** le premier angle aigu (A) est compris entre 15 et 25 degrés, et **en ce que** le deuxième angle aigu (B) est compris entre 15 et 25 degrés.

5. Chenille à bande souple sans fin selon la revendication 4, **caractérisée en ce que** le premier angle aigu (A) et le deuxième angle aigu (B) ont la même valeur absolue.

6. Chenille à bande souple sans fin selon l'une des revendications 1 à 5, **caractérisée en ce que** les nappes de fils (36, 38, 40, 42, 44) sont formées chacune à partir d'une feuille bobinée de fils calandrés ayant un diamètre compris entre 1,0 et 2,5 millimètres.

7. Chenille à bande souple sans fin selon la revendication 6, **caractérisée en ce que** fils composant les nappes de fils (36, 38, 40, 42, 44) sont de type multibrin.

8. Chenille à bande souple sans fin selon l'une des revendications 1 à 7, **caractérisée en ce que** le câble (30) est de type multibrin et a un diamètre compris entre 4 et 6 millimètres.

## Claims

1. Endless flexible belt caterpillar track formed from an elastomer and comprising a cable (3) of steel spirally wound and embedded in the thickness of the belt (12) to form essentially parallel, longitudinal turns (34), as well as at least one layer of wires embedded in the thickness of the belt toward the outside relative to the turns of the cable,
**characterised in that** it comprises outer layers formed successively from the turns (34) of the cable toward the outside, by:
- a first oblique layer (36) formed from wires that in turn form a first acute angle (A) to a perpendicular to the turns of the cable;
- a transversal layer (38) formed from wires that in turn form a right angle to the turns of the cable; and
- a second oblique layer (40) formed from wires that in turn form a second acute angle (B) to a perpendicular to the turns of the cable, the second acute angle (B) extending in the opposite direction to the first acute angle (A).

2. Endless flexible belt track according to claim 1, **characterised in that** it also comprises an additional transversal layer (42) formed from wires that in turn form a right angle to the turns of the cable and arranged after the second oblique layer (40) toward the outside.

3. Endless flexible belt track according to one of claims 1 and 2, **characterised in that** it also comprises an inner transversal layer (44) formed from wires that in turn form a right angle to the turns of the cable and arranged after the turns of the cable toward the inside.

4. Endless flexible belt track according to one of claims 1 to 3, **characterised in that** the first acute angle (A) is between 15 and 25 degrees, and **in that** the second acute angle (B) is between 15 and 25 degrees.

5. Endless flexible belt track according to claim 4, **characterised in that** the first acute angle (A) and the second acute angle (B) have the same absolute value.

6. Endless flexible belt track according to one of claims 1 to 5, **characterised in that** the layers of wires (36, 38, 40, 42, 44) are each formed from a coiled sheet of calendered wires having a diameter of between 1.0 and 2.5 millimetres.

7. Endless flexible belt track according to claim 6, **characterised in that** the wires comprising layers of wires (36, 38, 40, 42, 44) are of the multi-strand type.

8. Endless flexible belt track according to one of claims 1 to 7, **characterised in that** the cable (30) is of the multi-strand type and has a diameter of between 4 and 6 millimetres.

## Patentansprüche

1. Biegsame Endlosraupe, gebildet aus einem Elastomer, mit einem Stahlkabel (30), das spiralförmig aufgewickelt und eingebettet ist in die Raupe (12), um im Wesentlichen parallele Längswindungen (34) zu bilden, sowie mit wenigstens einer Faserschicht, die in die Ausdehnung der Raupe in die Richtung zur Außenseite bezüglich der Windungen des Kabels eingebettet sind,
**dadurch gekennzeichnet, dass** sie äußere Schichten oder Bahnen aufweist, die aufeinanderfolgend von den Windungen (34) des Kabels aus in Richtung zur Außenseite gebildet sind, durch:
- eine erste geneigte Schicht (36), die aus den Fasern gebildet ist, die einen ersten spitzen Winkel (A) bezüglich einer Senkrechten zu den Windungen des Kabels bildet;
- eine Querschicht (38), die aus Fasern gebildet ist, die einen rechten Winkel bezüglich der Windungen des Kabels bilden; und
- eine zweite geneigte Schicht (40), die aus Fasern gebildet ist, die einen zweiten spitzen Winkel (B) bezüglich einer Senkrechten zu den Windungen des Kabels bilden, wobei der zweite spitze Winkel (B) sich in einer Richtung entgegengesetzt zu jener des ersten spitzen Winkels (A) erstreckt.

2. Biegsame Endlosraupe nach Anspruch 1, **dadurch gekennzeichnet, dass** sie weiterhin eine zusätzliche Querschicht (42) aufweist, die aus Fasern gebildet ist, die einen rechten Winkel bezüglich den Windungen des Kabels bilden, und die nach der zweiten geneigten Schicht (40) in Richtung zur Außenseite angeordnet ist.

3. Biegsame Endlosraupe nach Anspruch 1 oder 2, **dadurch gekennzeichnet, dass** sie darüber hinaus eine innere Querschicht (44) aufweist, die aus Fasern gebildet ist, die einen rechten Winkel bezüglich den Windungen des Kabels bilden und nach den Windungen des Kabels in Richtung zur Innenseite angeordnet sind.

4. Biegsame Endlosraupe nach einem der Ansprüche 1 bis 3, **dadurch gekennzeichnet, dass** der erste spitze Winkel (A) zwischen 15 und 25 Grad beträgt, und dass der zweite spitze Winkel (B) zwischen 15 und 25 Grad beträgt.

5. Biegsame Endlosraupe nach Anspruch 4, **dadurch gekennzeichnet, dass** der erste spitze Winkel (A) und der zweite spitze Winkel (B) denselben absoluten Wert aufweisen.

6. Biegsame Endlosraupe nach einem der Ansprüche 1 bis 5, **dadurch gekennzeichnet, dass** die Faserschichten (36, 38, 40, 42, 44) jeweils aus einem aufgewickelten Blatt von kalandrierten Fasern gebildet sind, die einen Durchmesser zwischen 1,0 und 2,5 mm aufweisen.

7. Biegsame Endlosraupe nach Anspruch 6, **dadurch gekennzeichnet, dass** die die Faserschichten (36, 38, 40, 42, 44) bildenden Fasern vom Mehrstrangtyp sind.

8. Biegsame Endlosraupe nach einem der Ansprüche 1 bis 7, **dadurch gekennzeichnet, dass** das Kabel (30) vom Mehrstrangtyp ist und einen Durchmesser zwischen 4 und 6 mm aufweist.
